# EUROPÄISCHE PATENTSCHRIFT

(11) **EP 1 460 347 B1**
(45) Veröffentlichungstag und Bekanntmachung des Hinweises auf die Patenterteilung: **22.11.2006**
(21) Anmeldenummer: 04001411.0
(22) Anmeldetag: 23.01.2004
(51) Int. Cl.: F24D 19/10, G05D 23/19

(54) **Verfahren zum Betrieb einer Regelung für eine Heizungsanlage**
Method of controlling a heating system
Procédé de régulation pour une installation de chauffage

(30) Priorität: 20.03.2003 DE 10312373
(43) Veröffentlichungstag der Anmeldung: 22.09.2004
(73) Patentinhaber: ROBERT BOSCH GMBH, 70442 Stuttgart (DE)
(72) Erfinder: Jacob, Rainer, 35447 Reiskirchen (DE)

(56) Entgegenhaltungen:
- EP-A- 0 805 311
- US-A- 4 969 508

## Beschreibung

Die Erfindung betrifft ein Verfahren zum Betrieb einer Regelung für eine Heizungsanlage nach dem Oberbegriff des Patentanspruches 1. Ein solches Verfahren ist z.B. aus der DE 197 29 575 A1 bekannt.
Üblicherweise ist an das einem Heizgerät direkt zugeordnete Regelgerät bei einer Heizungsanlage ein Fernbedienungsgerät, eine Schaltuhr und/oder ein Raumthermostat angeschlossen, um den Nutzern eines Gebäudes die Bedienung der Heizungsanlage von einem Raum aus zu ermöglichen. Für einen vollautomatischen Betrieb von bekannten Heizungsanlagen sind außerdem diverse Messwerte erforderlich, nach denen die erzeugte Wärmeleistung und/oder die in die Räume eingebrachte Wärmeenergie geregelt wird. Neben der Außentemperatur gehört dazu auch die Raumtemperatur, denn diese ist maßgebend für die Rückmeldung zur Regelung der Heizungsanlage, insbesondere in Bezug auf die tatsächlichen Verhältnisse gegenüber den vom Nutzer eingestellten Sollwerten für einen Raum bzw. für die gesamte Nutzungseinheit.
Heizungsanlagen werden zum Energiesparen häufig phasenweise abgeschaltet oder abgesenkt mit niedrigerer Raumtemperatur betrieben. Ein Beispiel dafür ist die sogenannte Nachtabsenkung, wobei vom Anlagennutzer ein Raumtemperatursollwert sowie ein Absenkzeitraum vorgegeben, und von der Schaltuhr bzw. der Heizungsregelung eingehalten werden.
Da sich das Fernbedienungsgerät, die Schaltuhr und/oder ein Raumthermostat in einem Raum in der Regel an einer vom zentralen Regelgerät entfernten Position befinden, kennt man einerseits die Kommunikation mit dem Regelgerät über eine Zweidrahtleitung und andererseits die Signalübertragung per Funk. Dies hat den Vorteil, dass die Leitungsverbindung entfällt. Gleichzeitig wird dabei auch aus praktischen Gründen vermieden, die Bedieneinrichtung im Raum an das Stromnetz anzuschließen. Eine eigene Stromversorgung mit mindestens einer Batterie ist daher üblich, kann aber wegen der begrenzten Batterie-Lebensdauer möglicherweise zu einem erhöhten Aufwand für den Nutzer der Heizungsanlage führen.

Stromsparverfahren, wie zum Beispiel das aus der Mikroprozessortechnik bekannte wartezeitabhängige Umschalten einer ganzen elektronischen Baugruppe in einen Stromsparmodus, lassen sich nicht auf die Heizungstechnik übertragen. Begründet ist dies im Wesentlichen damit, dass die Hauptfunktion eines Raumthermostaten, nämlich die Erfassung, Anzeige und Weiterleitung eines Raumtemperatur-Wertes an die Heizungsregelung, immer gewährleistet sein muss.
Aus der DE 197 29 575 A1 ist weiterhin ein Raumtemperaturregler mit drahtloser Signalübertragung bekannt, der im Hinblick auf einen geringen Energieverbrauch den Temperaturregelkreis nur in zeitlichen Abständen aktiviert. Der Widerstand des Raumtemperaturreglers wird dabei generell bei Batteriebetrieb in größeren zeitlichen Abständen gemessen und auch in entsprechend größeren zeitlichen Abständen weiter gesendet als bei Solarzellenbetrieb. Durch diese Festlegung der Zeitabstände zwischen einzelnen Auswertungen ergeben sich aber möglicherweise Regelungenauigkeiten und somit Komforteinbußen im gesamten Nutzungszeitraum der Regelung.

Der Erfindung liegt daher die Aufgabe zu Grunde, ein Verfahren zum Betrieb einer Regelung für eine Heizungsanlage zu schaffen, mit dem der Stromverbrauch in einem batteriebetriebenen Raumthermostaten reduziert werden kann.

Erfindungsgemäß wurde dies mit den Merkmalen des Patentanspruches 1 gelöst. Vorteilhafte Weiterbildungen sind den Unteransprüchen zu entnehmen.
Generell ist der Stromspar-Betriebszustand nur während der von einer Schaltuhr vorgegebenen Abschalt- oder Absenk-Betriebsphase einzuschalten. Vorzugsweise wird der Stromspar-Betriebszustand mit einer vorgegebenen Verzugszeit nach dem Beginn einer über die Schaltuhr eingestellten Abschalt- oder Absenk-Betriebsphase automatisch eingeschaltet. Die Ausschaltung erfolgt danach wieder vor dem Ende einer über die Schaltuhr vorgegebenen Abschalt- oder Absenk-Betriebsphase, vorzugsweise mit einer Vorhaltezeit.
Um auch im Stromspar-Betriebszustand die Raumtemperatur festzustellen, geht während einer Abschalt- oder Absenk-Betriebsphase ein Raumthermostat in festgelegten Zeitabständen kurzzeitig in Betrieb. Vorzugsweise erfolgt dabei die Messung etwa alle 30 Minuten, und der Betrieb des Raumthermostaten dauert dann etwa 10 Sekunden.
Wird ein Helligkeitssensor zusätzlich mit der Heizungsregelung verknüpft, so kann auch im Tagbetrieb der Raumthermostat in den Stromspar-Betriebszustand schalten, welcher in diesem Fall unabhängig von einer Abschalt- oder Absenk-Betriebsphase wäre. Der Stromspar-Betriebszustand wird generell beendet und es erfolgt eine Rückkehr in den laufenden Regelungsbetrieb, insbesondere mit Auswertung der Raumtemperatur, sobald durch das Drücken einer Taste oder das Detektieren einer Bewegung im Raum an einem Fernbedienungsgerät, der Schaltuhr und/oder dem Raumthermostaten ein Raumnutzer erfasst wird.
Weiterhin kann während einer Abschalt- oder Absenk-Betriebsphase das dem Heizgerät zugeordnete Regelgerät und/oder der Raumthermostat vom raumtemperaturgeführten auf einen außentemperaturgeführten Regelbetrieb umschalten. Auch dann ist die energieautarke Bedieneinheit nicht in den dauernden Regelbetrieb eingebunden. Die Auswertung der Raumtemperatur während dieser Phase kann völlig entfallen oder wird nur in regelmäßigen Intervallen kurzzeitig durchgeführt.
Mit dem erfindungsgemäßen Verfahren wird ein einfaches, aber genaues Verfahren zum Betrieb einer Regelung für eine Heizungsanlage geschaffen, mit dem der Stromverbrauch in einem batteriebetriebenen Raumthermostaten deutlich reduziert werden kann. Die Batterielebensdauer wird verlängert, und trotzdem sind alle in der Heizungsregelung integrierten Regel- und Komfortfunktionen für Raumnutzer immer verfügbar.

## Patentansprüche

1. Verfahren zum Betrieb einer Regelung für eine Heizungsanlage mit einem dem Heizgerät direkt zugeordneten Regelgerät sowie mindestens einem Raumthermostaten in einem zu beheizenden Raum, der über eine Signalübertragung per Funk zur Kommunikation mit dem Regelgerät und mit einer eigenen Stromversorgung mit Batterien verfügt, wobei die Heizungsanlage zeitweise in Abschalt- oder Absenk-Betriebsphasen mit niedrigerer Raumtemperatur, betrieben wird,
**dadurch gekennzeichnet, dass** die über eine Schaltuhr vorgegebene Abschalt- oder Absenk-Betriebsphase mit einem Stromspar-Betriebszustand verknüpft ist, bei dem in dem Raumthermostaten nur noch das Zeitsignal ansteht und das Regeln und Anzeigen der Raumtemperatur ausgeschaltet oder eingeschränkt ist.

2. Verfahren nach Anspruch 1,
**dadurch gekennzeichnet, dass** der Stromspar-Betriebszustand mit einer Verzugszeit nach dem Beginn einer über eine Schaltuhr vorgegebenen Abschalt- oder Absenk-Betriebsphase einzuschalten ist.

3. Verfahren nach einem der Ansprüche 1 bis 2,
**dadurch gekennzeichnet, dass** der Stromspar-Betriebszustand mit einer Vorhaltezeit vor dem Ende einer über eine Schaltuhr vorgegebenen Abschalt- oder Absenk-Betriebsphase auszuschalten ist.

4. Verfahren nach einem der Ansprüche 1 bis 3,
**dadurch gekennzeichnet, dass** zur Feststellung der Raumtemperatur im Stromspar-Betriebszustand während einer Abschalt- oder Absenk-Betriebsphase der Raumthermostat in festgelegten Zeitabständen kurzzeitig in Betrieb geht.

5. Verfahren nach einem der Ansprüche 1 bis 4,
**dadurch gekennzeichnet, dass** die Raumtemperatur im Stromspar-Betriebszustand vorzugsweise etwa alle 30 Minuten festgestellt wird und dass dabei der Raumthermostat etwa für 10 Sekunden in Betrieb ist.

6. Verfahren nach einem der Ansprüche 1 bis 5,
**dadurch gekennzeichnet, dass** unter Zuhilfenahme eines Helligkeitssensors auch im Tagbetrieb der Raumthermostat in den Stromspar-Betriebszustand schaltet, welcher in diesem Fall unabhängig von einer Abschalt- oder Absenk-Betriebsphase ist.

7. Verfahren nach einem der Ansprüche 1 bis 6,
**dadurch gekennzeichnet, dass** durch das Drücken einer Taste oder das Detektieren einer Bewegung im Raum an einem Raumthermostaten der Stromspar-Betriebszustand beendet wird und eine Rückkehr in den laufenden Regelungsbetrieb, vorzugsweise mit Auswertung der Raumtemperatur, erfolgt.

8. Verfahren nach einem der Ansprüche 1 bis 7,
**dadurch gekennzeichnet, dass** während einer Abschalt- oder Absenk-Betriebsphase das dem Heizgerät zugeordnete Regelgerät und/oder der Raumthermostat vom raumtemperaturgeführten auf einen außentemperaturgeführten Regelbetrieb umschaltet, so dass die Auswertung einer Temperatur in einem zu beheizenden Raum während dieser Phase entfällt.

## Claims

1. A method for operating a regulator for a heating system comprising a regulating device directly assigned to the heater and at least one room thermostat in a room to be heated, which has signal transmission by radio for communication with the regulating device and its own battery power supply, wherein the heating system is operated in shutdown or lowering operating phases with lower room temperature at intervals, **characterised in that** the shutdown or lowering operating phase set by the timer switch is linked to an energy-saving operating state wherein only the time signal is still pending in the room thermostat and the regulation and display of the room temperature is switched off or restricted.

2. The method according to claim 1, **characterised in that** the energy-saving operating state is switched on with a time delay after the beginning of a shutdown or lowering operating phase set by the timer switch.

3. The method according to one of claims 1 to 2, **characterised in that** the energy-saving operating state is switched off with a hold-back time before the end of a shutdown or lowering operating phase set by the timer switch.

4. The method according to one of claims 1 to 3, **characterised in that** in order to determine the room temperature in the energy-saving operating state, the room thermostat operates briefly at specified time intervals during a shutdown or lowering operating phase.

5. The method according to one of claims 1 to 4, **characterised in that** the room temperature is preferably determined about every 30 minutes in the energy-saving operating state and the room thermostat is operated for about 10 seconds.

6. The method according to one of claims 1 to 5, **characterised in that** with the aid of a brightness sensor, the room thermostat also switches on during daytime operation in the energy-saving operating state which in this case is independent of a shutdown or lowering operating phase.

7. The method according to one of claims 1 to 6, **characterised in that** by pressing a button or the detection of a movement in the room at a room thermostat, the energy-saving operating state is ended and a return takes place to running regulating operation, preferably with evaluation of the room temperature.

8. The method according to one of claims 1 to 7, **characterised in that** during a shutdown or lowering operating phase, the regulating device assigned to the heater and/or the room thermostat is switched over from room-temperature-guided to external-temperature-guided regulating operation so that the evaluation of a temperature in a room to be heated is omitted during this phase.

## Revendications

1. Procédé pour l'exploitation d'un réglage pour une installation de chauffage avec un appareil de réglage directement attribué à l'appareil de chauffage et au moins un thermostat de local dans un local à chauffer, qui dispose d'une transmission de signal par radio pour la communication avec l'appareil de réglage et avec une alimentation électrique propre avec des batteries, l'installation de chauffage étant exploitée par moments dans des phases de service de déconnexion ou d'abaissement avec une température de local plus faible,
**caractérisé en ce que** la phase d'exploitation de déconnexion ou d'abaissement prédéfinie par une minuterie est associée avec une phase de service d'économie de courant, avec lequel seul le signal de temps reste encore présent dans le thermostat de local et le réglage et l'affichage de la température ambiante sont déconnectés ou limités.

2. Procédé selon la revendication 1,
**caractérisé en ce que** l'état de service d'économie de courant doit être enclenché avec un temps de retard après le début d'une phase d'exploitation de déconnexion ou d'abaissement prédéfinie par une minuterie.

3. Procédé selon l'une quelconque des revendications 1 à 2,
**caractérisé en ce que** l'état de service d'économie de courant peut être enclenché avec un temps de maintien avant la fin d'une phase d'exploitation de déconnexion ou d'abaissement prévue par une minuterie.

4. Procédé selon l'une quelconque des revendications 1 à 3,
**caractérisé en ce que**, pour déterminer la température du local, le thermostat de local est mis en service pendant un court instant à des intervalles définis dans le mode de service d'économie de courant pendant une période de service de déconnexion ou d'abaissement.

5. Procédé selon l'une quelconque des revendications 1 à 4,
**caractérisé en ce que** la température du local est déterminée dans l'état de service d'économie de courant à peu près toutes les 30 minutes environ et **en ce que** le thermostat de local est en service environ pour 10 secondes.

6. Procédé selon l'une quelconque des revendications 1 à 5,
**caractérisé en ce que**, avec le recours à un capteur de luminosité, le thermostat de local commute dans l'état de service d'économie de courant même en mode de jour, lequel état est indépendant dans ce cas d'une phase de déconnexion ou d'abaissement.

7. Procédé selon l'une quelconque des revendications 1 à 6,
**caractérisé en ce que**, par l'enfoncement d'une touche ou la détection d'un déplacement dans le local, l'état de service d'économie de courant est achevé sur un thermostat de local et un retour à l'exploitation de réglage en cours, de préférence avec l'analyse de la température du local, intervient.

8. Procédé selon l'une quelconque des revendications 1 à 7,
**caractérisé en ce que**, pendant une phase de service de déconnexion ou d'abaissement, l'appareil de réglage attribué à l'appareil de chauffage et/ou le thermostat de local commute du mode de réglage guidé par la température du local sur un mode de réglage guidé par la température extérieure, de sorte que l'analyse d'une température dans un local à chauffer est supprimée pendant cette phase.
